# EUROPÄISCHE PATENTSCHRIFT

(11) **EP 0 978 353 B1**
(45) Veröffentlichungstag und Bekanntmachung des Hinweises auf die Patenterteilung: **10.12.2003**
(21) Anmeldenummer: 99110755.8
(22) Anmeldetag: 04.06.1999
(51) Int. Cl.: B24B 55/05, B24B 23/02

(54) **Schleifmaschine mit einer abnehmbaren Schutzhaube**
Grinding machine with removable protective cover
Meuleuse à carter de protection amovible

(30) Priorität: 01.08.1998 DE 19834839
(43) Veröffentlichungstag der Anmeldung: 09.02.2000
(73) Patentinhaber: C. & E. Fein Gmbh & Co. KG, 70176 Stuttgart (DE)
(72) Erfinder: Rudolf, Boris, 70192 Stuttgart (DE); Frenck, Gerhard, 71332 Waiblingen (DE)
(74) Vertreter: Gahlert, Stefan, Dr.-Ing.

(56) Entgegenhaltungen:
- EP-A- 0 599 090
- DE-A- 3 633 943
- DE-A- 3 636 601
- DE-A- 3 638 337

## Beschreibung

Die Erfindung betrifft eine Schleifmaschine mit einer abnehmbaren Schutzhaube gemäß Oberbegriff des Patentanspruchs 1 sowie eine Schutzhaube für eine derartige Schleifmaschine gemäß Oberbegriff des Patentanspruchs 10.

Eine derartige Schleifmaschine und eine derartige Schutzhaube sind aus der DE 36 36 601 A1 bekannt.

Bei der bekannten Schleifmaschine sind am Spannring eine oder mehrere Sperrnasen vorgesehen, die in entsprechend geformte Vertiefungen am Spindelhals der Schleifmaschine eingreifen. Durch eine Abstimmung von Form, Größe, Anordnung und/oder Zahl von Sperrgliedern am Spannring mit entsprechenden Vertiefungen am Spindelhals wird eine Codierung gebildet, durch die gewährleistet wird, daß nur Schutzhauben einer vorbestimmten Größe auf den Spindelhals einer bestimmten Schleifmaschine passen.

Eine derartige Codierung ist notwendig, um sicherzustellen, daß nicht versehentlich eine Schutzhaube, die für große Schleifscheibendurchmesser ausgelegt ist, auf eine Schleifmaschine aufgesetzt wird, die lediglich für kleine Schleifscheibendurchmesser ausgelegt ist und somit mit höherer Drehzahl betrieben wird. Wenn nämlich eine Schleifscheibe großen Durchmessers mit einer höheren Drehzahl als der zulässigen Nenndrehzahl betrieben wird, so besteht die Gefahr, daß die Schleifscheibe zerbirst.

Die Sperrnase oder die Sperrnasen sind hierbei an dem rohrschellenartig ausgebildeten Spannring vorgesehen und wirken mit zugeordneten Vertiefungen auf dem Spindelhals zusammen.

Eine Schleifmaschine ähnlicher Bauart ist durch die DE 36 38 337 C2 bekannt geworden. Auch hierbei ist eine Sperrnase am Spannring vorgesehen und wirkt mit einer entsprechenden Vertiefung am Spindelhals der Schleifmaschine zusammen, um einerseits einen einwandfreien Sitz der Schutzhaube auf dem Spindelhals in axialer Richtung zu gewährleisten und um andererseits den Verdrehwinkel der Schutzhaube in Umfangsrichtung zu begrenzen.

Gemäß der zuvor genannten DE 36 36 601 A1 sind das Haubenteil und der Spannring der Schutzhaube einstückig ausgebildet, was jedoch zu einer komplizierten Herstellung führt. Teilweise wurden daher das Haubenteil und der Spannring auch getrennt hergestellt und anschließend miteinander verschweißt.

Um nun eine Codierung für verschiedene Schutzhauben zu erreichen, die gewährleistet, daß lediglich Schutzhauben einer vorbestimmten Größe oder kleinere Schutzhauben auf einen bestimmten Schleifmaschinentyp aufgesetzt werden können, müssen somit an den Spannringen unterschiedliche Sperrnasen vorgesehen werden.

Eine Anbringung geeigneter Sperrnasen am Spannring ist relativ aufwendig und führt darüber hinaus dazu, daß verschiedenartige Spannringe hergestellt und auf Lager gehalten werden müssen, die mit den Haubenteilen geeigneter Größe anschließend durch Schweißen verbunden werden.

Der Erfindung liegt die Aufgabe zugrunde, eine Schutzhaube sowie eine Schleifmaschine mit einer derartigen Schutzhaube zu schaffen, bei der die Schutzhaube auf möglichst einfache und kostengünstige Weise hergestellt werden kann und eine zuverlässige axiale Sicherung der Schutzhaube auf den Spindelhals gewährleistet ist.

Diese Aufgabe wird erfindungsgemäß durch eine Schleifmaschine mit einer abnehmbaren Schutzhaube mit den Merkmalen des Anspruchs 1 sowie durch eine Schutzhaube mit den Merkmalen des Anspruchs 10 gelöst.

Die Aufgabe der Erfindung wird auf diese Weise vollkommen gelöst.

Erfindungsgemäß wird die zumindest eine Sperrnase nämlich nunmehr am Haubenteil befestigt, das mit dem Spannring starr z.B. durch Schweißen verbunden wird.

Auf diese Weise wird es ermöglicht, den Spannring für verschiedene Schleifmaschinen verschiedener Baugröße immer gleich auszuführen und lediglich ein Haubenteil geeigneter Größe auszuwählen, das mit dem betreffenden Spannring verbunden wird. Da das Haubenteil ohnehin in seiner Größe an den jeweiligen Schleifscheibendurchmesser angepaßt werden muß, bedeutet die Anbringung von einer oder mehreren Sperrnasen am Haubenteil keinerlei zusätzlichen Aufwand. Das Haubenteil kann bspw. an seiner dem Spindelhals der Schleifmaschine zugewandten Innenfläche durch Stanzen bearbeitet werden, wobei gleichzeitig die Sperrnasen in der jeweils geeigneten Form, Größe und Anordnung mit ausgestanzt werden.

Somit wird der Herstellungsaufwand verringert und durch größere Stückzahlen bei der Herstellung des Spannrings eine weitere Kostenreduzierung erreicht und gleichzeitig die Teilevielfalt und die Lagehaltungskosten reduziert.

In vorteilhafter Weiterbildung der Erfindung ist das Haubenteil mit dem Spannring verschweißt oder vernietet.

Obwohl es grundsätzlich auch möglich wäre, eine Verbindung etwa durch Kleben zu gewährleisten, ergibt sich durch Verschweißen oder Vernieten eine besonders dauerhafte und leicht herstellbare Verbindung, die auch hohen Belastungen im Alltagsbetrieb widersteht.

In weiter bevorzugter Ausgestaltung der Erfindung ist die Sperrnase einstückig mit dem Haubenteil ausgebildet.

Auf diese Weise kann die Sperrnase besonders einfach hergestellt werden, indem sie z.B. bei der Herstellung des Haubenteils gemeinsam mit diesem durch Stanzen ausgebildet wird.

Außerdem wird die Herstellung vereinfacht und die Präzision in bezug auf Anordnung, Form und Größe der betreffenden Sperrnasen verbessert.

Gemäß einer weiteren Ausführung der Erfindung liegt der Spannring mit seiner Stirnfläche auf dem Haubenteil auf.

Durch diese Maßnahme wird es ermöglicht, daß die Sperrnase vom Haubenteil aus über die Innenkontur des Spannrings hinaus nach innen vorstehen kann, ohne daß hierzu eine entsprechende Öffnung im Spannring vorgesehen werden muß.

In einer alternativen Ausführung der Erfindung weist das Haubenteil eine dem Spindelhals zugewandte Fläche auf, die mit dem Spannring verbunden ist, wobei im Spannring eine Öffnung vorgesehen ist, durch die die Sperrnase radial nach innen hervorsteht.

Auch auf diese Weise ist es möglich, die Sperrnase einstückig mit dem Haubenteil auszubilden und radial über die Innenfläche des Spannrings hinaus nach innen hervorstehen zu lassen.

In bevorzugter Weiterbildung der Erfindung ist durch eine Abstimmung hinsichtlich Form, Anordnung, Größe und/oder Anzahl von Sperrnasen am Spindelhals auf zugeordnete Ausnehmungen der Schutzhaube eine Codierung zwischen Schutzhaube und Spindelhals gebildet, die nur eine Aufnahme einer Schutzhaube einer vorgegebenen Größe oder einer Schutzhaube, die für einen kleineren Schleifscheibendurchmesser ausgelegt ist, auf dem Spindelhals erlaubt.

Durch diese Maßnahme wird zusätzlich zu einer Sicherung der Schutzhaube gegen Axialverschiebungen eine Codierung verschiedener Schutzhauben mit geeigneten Schleifmaschinen erreicht, um sicherzustellen, daß lediglich eine Schutzhaube geeigneter Baugröße auf einen bestimmten Schleifmaschinentyp aufgesetzt werden kann.

In zusätzlicher Weiterbildung dieser Ausführung umfaßt die Vertiefung am Spindelhals eine Umfangsnut und eine Einführnut, die derart miteinander in Verbindung stehen, daß die Schleifhaube mit einer zugeordneten Sperrnase in die Einführnut einsetzbar und axial verschiebbar ist, bis die Sperrnase in die Umfangsnut eingreift und auf dem Spindelhals verdrehbar ist.

Durch diese Maßnahme wird eine einfache Montage der Schleifhaube auf einer geeigneten Schleifmaschine erreicht und gleichzeitig der Winkelbereich, über den sich die Schleifhaube auf dem Spindelhals verdrehen läßt, auf einen vorgegebenen Wert begrenzt, sofern sich die Umfangsnut nur über einen bestimmten Winkelbereich erstreckt.

In zusätzlicher Weiterbildung der Erfindung sind die mindestens eine Sperrnase an der Schutzhaube und die zugeordnete Vertiefung am Spindelhals hinsichtlich ihrer Querschnittsform, insbesondere hinsichtlich ihrer Ausdehnung in Radialrichtung aufeinander abgestimmt, um eine Codierung zu bilden.

Auf diese Weise lassen sich verschiedene Schleifhauben für einen Schleifmaschinentyp mit einem bestimmten Schleifscheibendurchmesser auf besonders einfache und kostengünstige Weise codieren.

Gemäß einer Weiterbildung dieser Ausführung ist eine Mehrzahl von Sperrnasen an der Schutzhaube vorgesehen, die hinsichtlich ihrer Form und/oder ihrer Anordnung in Verbindung mit zugeordneten Einführnuten eine Codierung bilden.

Diese Maßnahme hat den Vorteil, daß die betreffende Codierung auch in einfacher Weise für den Benutzer optisch sichtbar gemacht werden kann, da die unterschiedliche Anzahl, Lage und Form von Einführnuten am Spindelhals leicht von außen erkennbar ist.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Seitenansicht einer erfindungsgemäßen Schleifmaschine in perspektivischer Darstellung;
- Fig. 2: eine Ansicht einer erfindungsgemäßen Schutzhaube in vergrößerter Darstellung;
- Fig. 2a: eine Teilansicht des Haubenteils von der Innenseite des Spannrings aus im Bereich der Sperrnase;
- Fig. 3: einen Schnitt durch die Schutzhaube gemäß Fig. 2 längs der Linie III-III;
- Fig. 4: eine Aufsicht des äußeren Endes des Spindelhalses der Schleifmaschine gemäß Fig. 1 in vergrößerter, vereinfachter Darstellung;
- Fig. 5: eine Ansicht der Stirnfläche des Spindelhalses einer Schleifmaschine gemäß Fig. 1, an dem verschiedene Möglichkeiten für eine Codierung mit zugeordneten Sperrnasen dargestellt sind;
- Fig. 6: eine Abwandlung der Ausführung gemäß Fig. 2a und
- Fig. 7: . einen Teilschnitt durch die Schutzhaube gemäß Fig. 6 im Bereich der Sperrnase und der Verschweißung von Haubenteil und Spannring.

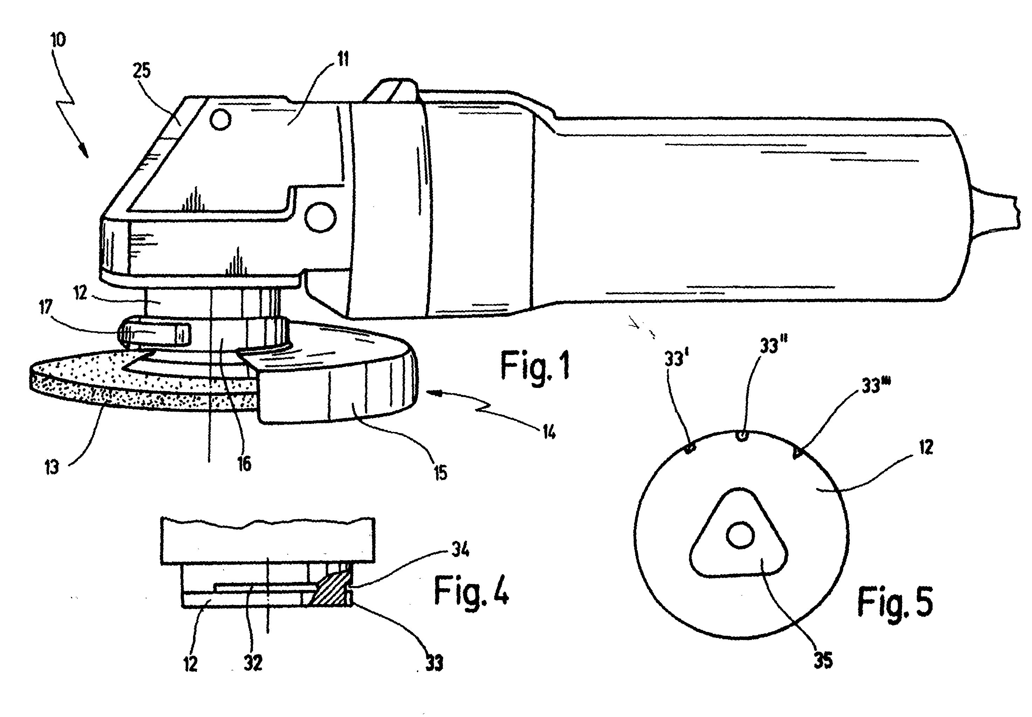

Eine erfindungsgemäße Schleifmaschine ist in Fig. 1 dargestellt und insgesamt mit der Ziffer 10 bezeichnet. Die als Winkelschleifer ausgebildete Schleifmaschine 10 umfaßt ein Gehäuse 11, von dessen Getriebekopf aus ein Spindelhals 12 seitlich nach außen hervorsteht, an dem eine Schutzhaube, die insgesamt mit der Ziffer 14 bezeichnet ist, mittels einer Spanneinrichtung 17 abnehmbar und winkelmäßig auf dem Spindelhals 12 verstellbar befestigt ist.

Innerhalb des Spindelhalses 12 ist eine Schleifspindel um ihre Längsachse drehbar gelagert aufgenommen, an deren äußerem Ende gemäß Fig. 5 eine Mehrkantaufnahme 35 zur werkzeuglosen Befestigung einer Schleifscheibe 13 im Zusammenwirken mit einem Spannhebel 25 vorgesehen ist.

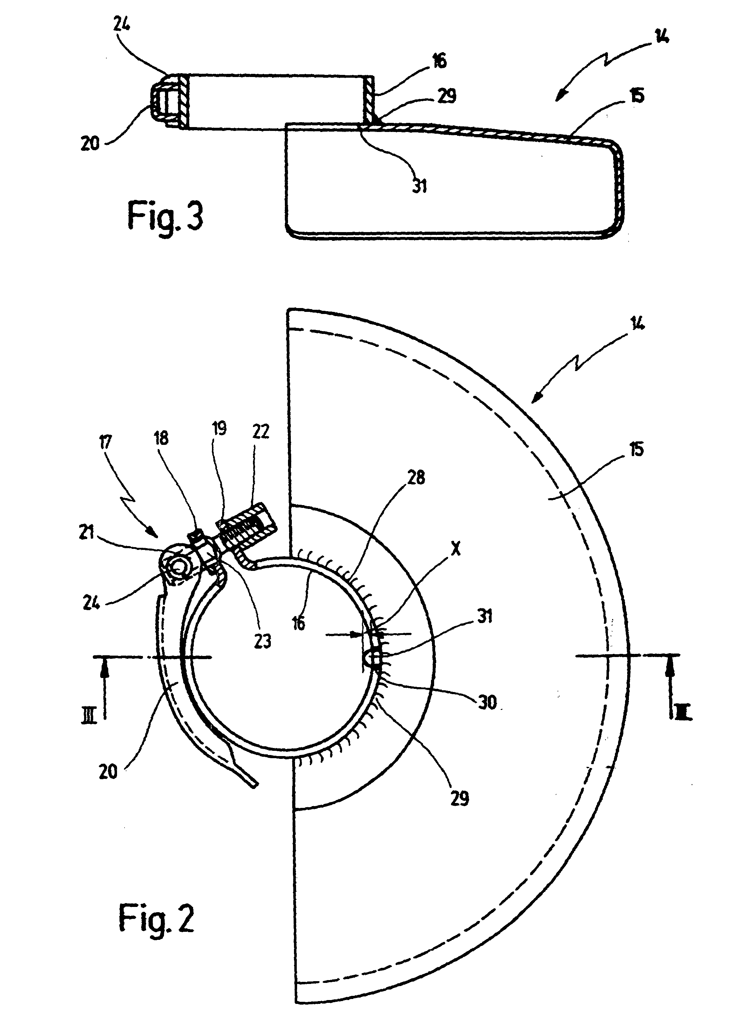

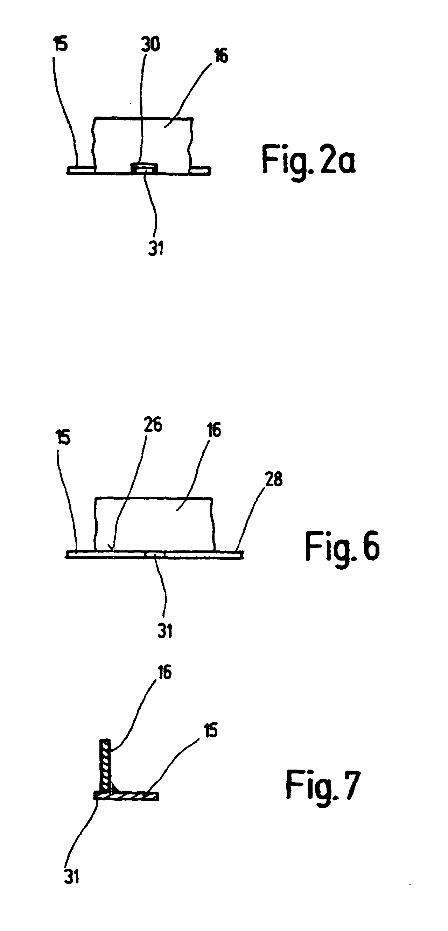

Der Aufbau der Schutzhaube 14 ist im einzelnen aus den Fig. 2 und 3 näher ersichtlich.

Die Schutzhaube 14 umfaßt ein nach vorne offenes Haubenteil 15, von dem die Schleifscheibe 13 teilweise umschlossen ist und das im wesentlichen die Form eines längsgeschnittenen Hohlzylinderabschnittes besitzt, sowie einen rohrschellenförmigen Spannring 16, der senkrecht auf die maschinenseitige Innenfläche 28 des Haubenteils 15 aufgeschweißt ist. Der Spannring 16 ist hohlzylindrisch ausgebildet und weist zwei seitliche einander gegenüberliegende Spannpratzen 18, 19 auf, die mittels einer insgesamt mit der Ziffer 17 bezeichneten Spanneinrichtung gegeneinander verspannbar sind. Der Spannring 18 ist von innen her an die Innenfläche 28 des Haubenteils 15 angesetzt und mittels einer umlaufenden Schweißnaht 29 mit dem Haubenteil 15 verbunden.

Wie aus den Fig. 2 und 3 ersichtlich, ist an der dem Spindelhals 12 zugewandten Innenfläche 28 des Haubenteils 15 eine Sperrnase 31 in Form einer Zunge angeformt, die vorzugsweise einstückig mit dem Haubenteil 15 ausgebildet ist und durch eine entsprechende Öffnung 30 des Spannrings 16 über die Innenkontur des Spannrings 16 radial nach innen in Richtung auf den Spindelhals 12 hervorsteht. Bei einer einstückigen Ausbildung der Sperrnase 31 mit dem Haubenteil 15 kann die Sperrnase gemeinsam mit dem Haubenteil bspw. bei einem Stanzvorgang präzise hergestellt werden.

Diese Sperrnase 31 greift in eine entsprechend geformte Ausnehmung auf dem Spindelhals 12 ein, die in Fig. 4 insgesamt mit der Ziffer 34 bezeichnet ist. Die Ausnehmung 34 umfaßt eine Umfangsnut 32, die sich in Umfangsrichtung des Spindelhalses 12 über einen bestimmten Winkelbereich erstreckt, sowie eine axiale Einführnut 33, die es ermöglicht, daß die Schutzhaube in einer bestimmten Winkelstellung mit der Sperrnase 31 in die Einführnut 33 eingesetzt und axial verschoben werden kann, bis die Sperrnase 31 in die Umfangsnut 32 gelangt, so daß dann eine Verdrehung der Schutzhaube 14 im Rahmen des von der Umfangsnut 32 vorgegebenen Winkelbereiches ermöglicht ist.

Ist die Schutzhaube 14 in die gewünschte Winkelposition auf dem Spindelhals 12 eingestellt, so wird diese durch die Spanneinrichtung 17 unverdrehbar auf dem Spindelhals 12 fixiert. Hierzu ist ein Spannhebel 20 vorgesehen, der über einen Niet 24 mit einer Einstellschraube 23 verschwenkbar verbunden ist, die die beiden Spannpratzen 18, 19 des Spannrings 16 durchsetzt und in eine Gewindehülse 22 an der dem Spannhebel 20 gegenüberliegenden Spannpratze 19 eingeschraubt ist. Der Spannhebel 20 weist einen Exzenter 21 auf, durch den beim Anklappen an den Spannring 16 eine entsprechende Zugspannung auf die beiden Spannpratzen 18, 19 ausgeübt wird, so daß die Schutzhaube 14 auf dem Spindelhals 12 fixiert wird. Im gelösten Zustand kann durch Verdrehen der Schraube 23 gemeinsam mit dem Spannhebel 20 eine Einstellung der Vorspannung vorgenommen werden.

Die Sperrnase 31 steht um einen Betrag, der in Fig. 2 mit x bezeichnet ist, über die Innenkontur des Spannrings 16 nach innen in Richtung auf den Spindelhals 12 hervor. Im gezeichneten Beispiel beträgt dieser Betrag x etwa 3 mm. Durch die Größe dieses Betrages x, d.h. den Überstand der Sperrnase 31 über die Innenkontur des Spannrings 16 in Radialrichtung wird nun eine Codierung verschiedener Schutzhaubengrößen im Zusammenwirken mit einer geeigneten Einführnut 33 und/oder Umfangsnut 32 am Spindelhals 12 eines bestimmten Schleifmaschinentyps ermöglicht.

Schutzhauben 14 mit einem größeren Durchmesser, die also für Schleifscheiben mit einem größeren Durchmesser als dem in Fig. 2 gezeigten Durchmesser ausgelegt sind, werden bspw. mit einer Sperrnase 31 versehen, die um einen größeren Betrag x in Radialrichtung über die Innenkontur des Spannrings 16 hervorsteht. Wenn etwa die Schleifhaube 14 gemäß Fig. 1 für eine Schleifscheibe mit einem Durchmesser von 180 mm ausgelegt ist, und der Überstand x 3 mm beträgt, könnte bspw. eine Schutzhaube 14, die für eine Schleifscheibe von 230 mm durchgelegt ist, einen Überstand x von 4 mm aufweisen. Durch eine derartige Abstufung wird sichergestellt, daß es nicht möglich ist, eine Schutzhaube größeren Durchmessers auf eine Schleifmaschine aufzusetzen als vorgesehen. Umgekehrt können Schutzhauben mit kleinerem Haubendurchmesser auf die Schleifmaschine aufgesetzt werden, bei denen dann die Sperrnase 31 einen geringeren Überstand x, also z.B. von etwa 2 mm aufweist. Dies ist zulässig, da das Betreiben einer Schleifscheibe geringeren Durchmessers als dem Nenndurchmesser auf einer Schleifmaschine ohne weiteres möglich ist, da die Schleifscheibe dann lediglich mit einer geringeren Drehzahl als der Nenndrehzahl betrieben wird.

Aus der Darstellung in Fig. 5 ist ersichtlich, daß auch eine Codierung durch das Zusammenspiel zwischen Sperrnase und Ausnehmung 34 auf andere Art und Weise erreicht werden kann.

So können z.B. mehrere Sperrnasen 33' gleicher Form und Größe an verschiedenen Stellen auf dem Spindelhals 12 vorgesehen sein, wobei durch die Anzahl der Sperrnasen 33' in Verbindung mit der Anordnung auf dem Spindelhals eine Codierung ermöglicht ist. Darüber hinaus können auch verschiedene Formen von Einführnuten im Zusammenspiel mit den entsprechenden Sperrnasen vorgesehen sein, wie durch die anders geformten Sperrnasen 33'' und 33''' in Fig. 5 verdeutlicht ist.

Es versteht sich, daß weitere Varianten derartiger Codierungsmöglichkeiten ohne weiteres möglich sind.

Vorzugsweise sind, wie zuvor erwähnt, am Spannring 16 entsprechende Öffnungen 30 vorgesehen, durch die die Sperrnasen 31 über die Innenkontur des Spannrings 16 hinaus radial nach innen hervorstehen (vgl. Fig. 2a).

Gemäß einer alternativen Ausführung, die in den Fig. 6 und 7 dargestellt ist, ist der Spannring 16 mit seiner Stirnfläche 26 auf die Oberfläche des Haubenteils 15 aufgesetzt und gleichfalls durch eine umlaufende Schweißnaht mit dem Haubenteil 15 verbunden. Diese Ausführung hat den Vorteil, daß keine Öffnungen im Spannring 16 erforderlich sind.

Bei den erfindungsgemäßen Schutzhauben wird die Herstellung der Sperrnasen deutlich vereinfacht, und es können immer dieselben Spannringe unabhängig von der Größe des Haubenteils 15 verwendet werden.

## Patentansprüche

1. Schleifmaschine mit einer abnehmbaren Schutzhaube, mit einem Spindelhals (12), wobei die Schutzhaube (14) einen Spannring (16) aufweist, der auf den Spindelhals (12) aufsetzbar ist und in einer gewünschten Winkelposition mittels einer Spanneinrichtung (17) feststellbar ist, wobei die Schutzhaube (14) ferner ein mit dem Spannring (16) starr verbundenes Haubenteil (15) aufweist, das sich etwa senkrecht zum Spannring (16) erstreckt, um eine aufgespannte Schleifscheibe (13) teilweise zu umschließen, und wobei mindestens eine Sperrnase (31) vorgesehen ist, die über den Spannring (16) hinaus radial nach innen in Richtung auf den Spindelhals (12) vorsteht und in eine zugeordnete Ausnehmung (34) am Spindelhals (12) eingreift, **dadurch gekennzeichnet, dass** die Sperrnase (31) am Haubenteil (15) vorgesehen ist, das mit der Sperrnase (31) starr verbunden ist.

2. Schleifmaschine nach Anspruch 1, bei der das Haubenteil (15) mit dem Spannring (16) verschweißt oder vernietet ist.

3. Schleifmaschine nach Anspruch 1 oder 2, bei der die Sperrnase (31) einstückig mit dem Haubenteil (15) ausgebildet ist.

4. Schleifmaschine nach einem der vorhergehenden Ansprüche, bei der der Spannring (16) mit seiner Stirnfläche (26) auf dem Haubenteil (15) aufliegt.

5. Schleifmaschine nach Anspruch 1, bei der das Haubenteil (15) eine dem Spindelhals (12) zugewandte Fläche (28) aufweist, die mit dem Spannring (16) verbunden ist und bei der im Spannring (16) eine Öffnung (30) vorgesehen ist, durch die die Sperrnase (31) radial nach innen hervorsteht.

6. Schleifmaschine nach einem der vorhergehenden Ansprüche, bei der durch eine Abstimmung hinsichtlich Form, Anordnung, Größe und/oder Anzahl von Sperrnasen (31) am Spindelhals (12) auf zugeordnete Ausnehmungen (34) der Schutzhaube (14) eine Codierung zwischen Schutzhaube (14) und Spindelhals (12) gebildet ist, die nur eine Aufnahme einer Schutzhaube (14) einer vorgegebenen Größe oder einer Schutzhaube (14), die für einen kleineren Schleifscheibendurchmesser ausgelegt ist, auf dem Spindelhals (12) erlaubt.

7. Schleifmaschine nach Anspruch 5 oder 6, bei der die Ausnehmung (34) am Spindelhals (12) eine Umfangsnut (32) und eine Einführnut (33, 33' , 33" , 33''') umfaßt, die derart in Verbindung stehen, daß die Schutzhaube (14) mit einer zugeordneten Sperrnase (31) in die Einführnut (33, 33', 33'', 33''') einsetzbar und axial verschiebbar ist, bis die Sperrnase (31) in die Umfangsnut (32) eingreift und auf dem Spindelhals (12) verdrehbar ist.

8. Schleifmaschine nach Anspruch 6 oder 7, bei der die mindestens eine Sperrnase (31) an der Schutzhaube (14) und die zugeordnete Ausnehmung (34) am Spindelhals (12) hinsichtlich ihrer Form, insbesondere hinsichtlich ihrer Ausdehnung in Radialrichtung miteinander eine Codierung bilden.

9. Schleifmaschine nach Anspruch 7 oder 8, bei der eine Mehrzahl von Sperrnasen (31) an der Schutzhaube (14) vorgesehen ist, die hinsichtlich ihrer Form und/oder ihrer Anordnung in Verbindung mit zugeordneten Einführnuten (33, 33', 33'', 33''') eine Codierung bilden.

10. Schutzhaube (14) für eine Schleifmaschine nach einem der vorhergehenden Ansprüche, wobei die Schutzhaube (14) einen Spannring (16) aufweist, der auf den Spindelhals der Schleifmaschine aufsetzbar ist und in einer gewünschten Winkelposition mittels einer Spanneinrichtung (17) feststellbar ist, wobei die Schutzhaube (14) ferner ein mit dem Spannring (16) starr verbundenes Haubenteil (15) aufweist, das sich etwa senkrecht zum Spannring (16) erstreckt, um eine aufgespannte Schleifscheibe teilweise zu umschliessen, und wobei mindestens eine Sperrnase (31) vorgesehen ist, die zum Eingriff in eine Ausnehmung am Spindelhals der Schleifmaschine über den Spannring (16) hinaus radial nach innen vorsteht, **dadurch gekennzeichnet, dass** die Sperrnase (31) am Haubenteil (15) vorgesehen ist, das mit der Sperrnase (31) starr verbunden ist.

## Claims

1. A grinding machine comprising a detachable protection hood having a spindle collar (12), wherein the protection hood comprises a clamping ring (16) which can be placed on the spindle collar (12) and can be fixed in a desired angular position by means of a clamping device (17), wherein the protection hood (14) further comprises a hood part (15) being rigidly connected with the clamping ring (16) and extending substantially perpendicularly to the clamping ring (16) to partially enclose a clamped grinding disk (13), further at least one locking lug (31) being provided which protrudes radially inwardly beyond the clamping ring (16) into the direction of the spindle collar (12) and engages an associated recess (34) on the spindle collar (12), **characterized in that** the locking lug (31) is provided on the hood part (15) which is rigidly connected with the locking lug (31).

2. The grinding machine of claim 1, wherein the hood part (15) is welded or riveted to the clamping ring (16).

3. The grinding machine of claim 1 or 2, wherein the locking lug (31) is configured integrally with the hood part (15).

4. The grinding machine of any of the preceding claims, wherein the clamping ring (16) rests with its front surface (26) against the hood part (15).

5. The grinding machine of claim 1, wherein the hood part (15) comprises a surface (28) facing the spindle collar (12) being connected with the clamping ring (16), wherein in the clamping ring (16) an opening (30) is provided through which the locking lug (31) protrudes radially inwardly.

6. The grinding machine of any of the preceding claims, wherein a coding between the grinding hood (14) and the spindle groove (12) is formed by matching locking lugs (31) with respect to their shape, location, size and/or number to associated recesses (34) on the protection hood (14), the coding allowing only an attachment of a protection hood of a preset size to the spindle collar (12), or of a protection hood (14) which is designed for a smaller grinding disk diameter.

7. The grinding machine of claim 5 or 6, wherein the recess (34) on the spindle collar (12) comprises a peripheral groove (32) and an insertion groove (33, 33', 33'', 33''') which are correlated with each other such that the protection hood (14) can be inserted with an associated locking lug (31) into the insertion groove (33, 33' , 33'', 33''') and can be axially slided until the locking lug (31) engages the peripheral groove (32) and is rotatable on the spindle collar (12).

8. The grinding machine of claim 6 or 7, wherein the at least one locking lug (31) on the protection hood (14) and the associated recess (34) on the spindle collar (12) together form a coding with respect to their shape, in particular with respect to their extension in radial direction.

9. The grinding machine of claim 7 or 8, wherein a plurality of locking lugs (31) is provided on the protection hood (14), the locking lugs in combination with associated insertion grooves (33, 33', 33'', 33''') forming a coding with respect to their shape and/or their location.

10. A protection hood (14) for a grinding machine according to any of the preceding claims, wherein the protection hood (14) comprises a clamping ring (16) which can be attached onto the spindle collar of the grinding machine and which can be fixed in a desired angular position by means of a clamping device (17), wherein the protection hood (14) further comprises a hood part (15) being rigidly connected with a clamping ring (16), the hood part extending substantially perpendicularly to the clamping ring (16) to partially enclose a clamped grinding disk, wherein at least one locking lug (31) is provided which radially protrudes inwardly beyond the clamping ring (16) for engaging a recess on the spindle collar of the grinding machine, **characterized in that** the locking lug (31) is provided on the hood part (15) which is rigidly connected to the locking lug (31).

## Revendications

1. Meuleuse à capot de protection amovible, comportant un collet de broche (12), le capot de protection (14) comportant une bague de serrage (16) qui peut être placée sur le collet de broche (12) et bloquée dans une position angulaire voulue au moyen d'un dispositif de serrage (17), le capot de protection (14) comportant en outre une partie de capot (15) reliée rigidement à la bague de serrage (16), qui s'étend approximativement perpendiculairement à la bague de serrage (16), pour enfermer partiellement un disque de meulage (13) serré dessus, et au moins un ergot de blocage (31) étant prévu qui dépasse radialement vers l'intérieur de la bague de serrage (16), en direction du collet de broche (12), et s'engage dans un évidement (34) associé du collet de broche (12), **caractérisée en ce que** l'ergot de blocage (31) est prévu sur la partie de capot (15), laquelle est reliée rigidement à l'ergot de blocage (31).

2. Meuleuse selon la revendication 1, dans laquelle la partie de capot (15) est soudée ou rivetée avec la bague de serrage (16).

3. Meuleuse selon la revendication 1 ou 2, dans laquelle l'ergot de blocage (31 ) est réalisé d'un seul tenant avec la partie de capot (15).

4. Meuleuse selon l'une des revendications précédentes, dans laquelle la bague de serrage (16) repose par sa surface frontale (26) sur la partie de capot (15).

5. Meuleuse selon la revendication 1, dans laquelle la partie de capot (15) présente une surface (28) tournée vers le collet de broche (12), qui est reliée à la bague de serrage (16) et pour laquelle est prévue, dans la bague de serrage (16), une ouverture (30) à travers laquelle l'ergot de blocage (31 ) dépasse radialement vers l'intérieur.

6. Meuleuse selon l'une des revendications précédentes, dans laquelle en adaptant la forme, la disposition, la taille et/ou le nombre d'ergots de blocage (31 ) sur le collet de broche (12) à des évidements (34) associés du capot de protection (14), on réalise un codage entre le capot de protection (14) et le collet de broche (12), lequel n'autorise la réception sur le collet de broche (12) que d'un capot de protection (14) de taille prédéfinie ou d'un capot de protection (14) qui est dimensionné pour un diamètre plus petit du disque de meulage.

7. Meuleuse selon la revendication 5 ou 6, dans laquelle l'évidement (34) du collet de broche (12) comprend une rainure périphérique (32) et une rainure d'introduction (33, 33', 33", 33"'), qui sont en liaison de manière à ce que le capot de protection (14) puisse être inséré par un ergot de blocage (31 ) associé dans la rainure d'introduction (33, 33', 33", 33"'), et puisse coulisser axialement jusqu'à ce que l'ergot de blocage (31 ) s'engage dans la rainure périphérique (32) et puisse tourner sur le collet de broche (12).

8. Meuleuse selon la revendication 6 ou 7, dans laquelle le ou les ergot(s) de blocage (31 ) sur le capot de protection (14) et l'évidement (34) associé du collet de broche (12) sont adaptés l'un à l'autre en ce qui concerne leur forme, en particulier leur étendue dans la direction radiale, pour former un codage.

9. Meuleuse selon la revendication 7 ou 8, dans laquelle une pluralité d'ergots (31) sont prévus sur le capot de protection (14), qui forment un codage en ce qui concerne leur forme et/ou leur disposition en combinaison avec des rainures d'introduction (33, 33', 33", 33"') associées.

10. Capot de protection (14) pour une meuleuse selon l'une des revendications précédentes, le capot de protection (14) comportant une bague de serrage (16) qui peut être placée sur le collet de broche de la meuleuse et peut être bloquée dans une position angulaire voulue au moyen d'un dispositif de serrage (17), le capot de protection (14) comportant en outre une partie de capot (15) reliée rigidement à la bague de serrage (16), qui s'étend approximativement perpendiculairement à la bague de serrage (16), pour enfermer partiellement un disque de meulage (13) serré dessus, et au moins un ergot de blocage (31 ) étant prévu qui dépasse radialement vers l'intérieur de la bague de serrage (16), en direction du collet de broche (12), et s'engage dans un évidement (34) associé du collet de broche (12), **caractérisé en ce que** l'ergot de blocage (31) est prévu sur la partie de capot (15) qui est reliée rigidement à l'ergot de blocage (31).
